## Europäisches Patentamt

## European Patent Office

## Office européen des brevets

(19)

(11) Veröffentlichungsnummer: **0 044 969**
**B1**

(12) # EUROPÄISCHE PATENTSCHRIFT

(45) Veröffentlichungstag der Patentschrift:
**16.10.85**

(51) Int. Cl.⁴: **C 08 G 18/66, C 08 G 18/42**

(21) Anmeldenummer: **81105198.6**

(22) Anmeldetag: **04.07.81**

(54) **Thermoplastische verarbeitbare Polyurethan-Elastomere mit verbesserter Abriebbeständigkeit und ein Verfahren zu deren Herstellung.**

(30) Priorität: **26.07.80 DE 3028501**

(43) Veröffentlichungstag der Anmeldung:
**03.02.82 Patentblatt 82/5**

(45) Bekanntmachung des Hinweises auf die Patenterteilung:
**16.10.85 Patentblatt 85/42**

(84) Benannte Vertragsstaaten:
**AT BE CH DE FR GB IT LI**

(56) Entgegenhaltungen:
**EP - A - 0 002 241**
**EP - A - 0 017 060**
**DE - A - 2 815 540**
**DE - B - 1 301 124**
**GB - A - 1 075 274**

(73) Patentinhaber: **BASF Aktiengesellschaft,
Carl-Bosch-Strasse 38, D-6700 Ludwigshafen (DE)**

(72) Erfinder: **Stutz, Herbert, Dr., Schneidemuehler
Strasse 9C, D-7500 Karlsruhe (DE)**
Erfinder: **Weyland, Peter, Dr., Ludwigshafener
Strasse 12A, D-6710 Frankenthal (DE)**
Erfinder: **Bittner, Gerhard, Dr., Storkmannstrasse 7A,
D-2840 Diepholz (DE)**

## Beschreibung

Die Erfindung betrifft thermoplastisch verarbeitbare Polyurethan-Elastomere, die eine verbesserte Abriebbeständigkeit besitzen und erhalten werden durch Umsetzung von organischen Diisocyanaten, Polyester-polyolen mit Molekulargewichten von 800 bis 5000, hergestellt durch Polykondensation von Dicarbonsäuremischungen aus Bernstein-, Glutar- und Adipinsäure und Diolen oder Mischungen aus Diolen und Diaminen oder Alkanolaminen, difunktionellen Kettenverlängerungsmitteln und 0,01 bis 5 Gew.-%, bezogen auf das Polyester-polyolgewicht, eines tri- bis hexafunktionellen Vernetzungsmittels im Verhältnis von NCO-Gruppen zu Zerewitinoff aktiven Wasserstoffatomen von 1:0,9 bis 1,2.

Die Herstellung von thermoplastischen Polyurethan-Elastomeren durch Umsetzung von höhermolekularen Polyhydroxylverbindungen, organischen Diisocyanaten und niedermolekularen Kettenverlängerungsmitteln ist bekannt und wird in den einschlägigen Publikationen, beispielsweise im Kunststoff-Handbuch, Band VII, «Polyurethane» von R. Vieweg und A Höchtlen, Carl Hanser Verlag, München 1966 oder in Kunststoffe 68 (1978), Seiten 819–825 sowie den dort genannten Literaturstellen, beschrieben.

Es hat auch nicht an Versuchen gefehlt, preisgünstige Rohstoffe zur Herstellung von Polyurethanen zu verwenden.

So beschreibt beispielsweise die GB-PS 882 603 ein Verfahren zur Herstellung von Polyurethan-Schaumstoffen unter Verwendung von Polyesterpolyolen auf Basis von Mischungen aus Adipin-, Glutar- und Bernsteinsäure, wie sie bei der technischen Adipinsäuresynthese durch Oxidation von Cyclohexanol oder Cyclohexanon mit Salpetersäure als Nebenprodukt anfallen, und Butandiol-1,3.

Polyurethan-Schaumstoffe werden ferner nach Angaben der GB-PS 1 475 541 hergestellt durch Umsetzung von organischen Polyisocyanaten mit flüssigen Polyester-polyolen, die durch Kondensation mindestens eines Polyols und einer Mischung aus Glutar-, Adipin- und Bernsteinsäure mit einem Glutarsäuregehalt von 5 bis 95 Gew.-% erhalten werden, in Gegenwart eines Treibmittels.

Die in den genannten Patentschriften beschriebenen Polyurethan-Schaumstoffe sind nicht thermoplastisch verarbeitbar.

Der Einsatz von Polyester-polyolen aus technischen Dicarbonsäuregemischen für thermoplastisch verarbeitbare Polyurethan-Elastomere scheiterte nach eigenen nicht veröffentlichten Untersuchungen bislang immer daran, dass das mechanische Eigenschaftsniveau der daraus hergestellten Elastomeren, vorzugsweise deren Abriebbeständigkeit, den technischen Anforderungen nicht genügte.

Aufgabe der vorliegenden Erfindung war es, qualitativ hochwertige, thermoplastisch verarbeitbare Polyurethan-Elastomere unter Verwendung von preisgünstigen, niedrigviskosen Polyesterpolyolen herzustellen.

Gegenstand der vorliegenden Erfindung sind somit thermoplastisch verarbeitbare Polyurethan-Elastomere und ein Verfahren zu deren Herstellung, die erhalten werden durch Umsetzung von

a) organischen Diisocyanaten,

b) Polyester-polyolen mit Molekulargewichten von 800 bis 5000, hergestellt durch Polykondensation einer Dicarbonsäuremischung, die 20 bis 40 Gew.% Bernsteinsäure
35 bis 60 Gew.% Glutarsäure und
20 bis 40 Gew.% Adipinsäure, bezogen auf das Gesamtgewicht der genannten Dicarbonsäuren enthält, und Diolen oder Mischungen aus Diolen und Diaminen oder Alkanolaminen,

c) difunktionellen Kettenverlängerungsmitteln mit Molekulargewichten von 60 bis 350 und

d) tri- bis hexafunktionellen Vernetzungsmitteln im Verhältnis von NCO-Gruppen zur Summe aller mit NCO-Gruppen reagierenden Wasserstoffatome der Komponenten (b), (c) und (d) von 1:0,9 bis 1,2.

Überraschenderweise wurde gefunden, dass das mechanische Eigenschaftsniveau, insbesondere die Reissfestigkeit und Abriebfestigkeit, entscheidend verbessert werden kann, wenn zur Herstellung der thermoplastisch verarbeitbaren Polyurethan-Elastomeren aus den obengenannten Polyester-polyolen geringe Mengen an höherfunktionellen Vernetzungsmitteln mitverwendet werden.

Dieser Befund war in keiner Weise vorsehbar, da bei thermoplastischen Polyurethan-Elastomeren durch unter Verarbeitungsbedingungen stabile chemische Vernetzungen normalerweise immer eine Verschlechterung der mechanischen Eigenschaften beobachtet wird. Ausserdem war zu erwarten, dass durch die Einführung von chemischen Vernetzungen eine thermoplastische Verarbeitung unmöglich gemacht würde.

Zur Herstellung der thermoplastisch verarbeitbaren Polyurethan-Elastomeren eignen sich erfindungsgemäss Polyester-polyole (b) mit Molekulargewichten von 800 bis 5000, vorzugsweise von 1000 bis 3000, entsprechend Hydroxylzahlen von ungefähr 20 bis 140, vorzugsweise 40 bis 110, welche durch Polykondensation eines technischen Gemisches aus Bernstein-, Glutar- und Adipinsäure und Diolen mit 2 bis 12, vorzugsweise 2 bis 6 Kohlenstoffatomen oder Mischungen dieser Diole mit niedermolekularen Diaminen und/oder Alkanolaminen erhalten werden.

Zur Herstellung der Polyester-polyole wird ein Dicarbonsäuregemisch verwendet, das 20 bis 40 Gew.%, vorzugsweise 28 bis 33 Gew.% Bernsteinsäure, 35 bis 60 Gew.%, vorzugsweise 40 bis 45 Gew.% Glutarsäure und 20 bis 40 Gew.%, vorzugsweise 24 bis 28 Gew.% Adipinsäure, bezogen auf das Gesamtgewicht der genannten Dicarbonsäuren enthält. Das Dicarbonsäuregemisch kann daneben noch bis zu 5 Gew.%, vorzugsweise 2 bis 3 Gew.%, bezogen auf das Gesamtgewicht Verunreinigungen enthalten, welche im wesentlichen aus Imiden der Bernstein- und Glutarsäure bestehen.

Dicarbonsäuregemische der genannten Art fallen üblicherweise bei der Herstellung von Adipinsäure durch Oxidation von Cyclohexanol oder Cyclohexanon mit Salpetersäure als Nebenprodukte an und sind wegen ihrer Verunreinigungen und wechselnden Zusammensetzungen normalerweise nicht verwertbar. Anstelle des Dicarbonsäuregemisches können auch esterbildende Derivate dieser Dicarbonsäuren, beispielsweise Gemische von Anhydriden oder von Mono- und/oder Dialkylestern mit 1 bis 5 C-Atomen im Alkylrest, vorzugsweise Dimethylester dieser Dicarbonsäuren eingesetzt werden.

Als Diole mit 2 bis 12 Kohlenstoffatomen zur Herstellung der Polyester-polyole kommen in Betracht: aliphatische Diole, wie z.B. Ethylenglykol, Propandiol-1,2 und -1,3, Butandiol-1,3 und -1,4, Pentandiol-1,5, Hexandiol-1,6, Octandiol-1,8, Decandiol-1,10 und Dodecandiol-1,12, alkylsubstituierte aliphatische Diole mit 1 bis 2 Kohlenstoffatomen im Alkylrest, wie z.B. Neopentylglykol, 2-Methylpropandiol-1,3 und 3-Methylpentandiol-1,5 und Diole mit Heteroatomen, wie Stickstoff, Schwefel oder vorzugsweise Sauerstoff als Brückenglieder, wie z.B. Diethylenglykol, Triethylenglykol, Dipropylenglykol, Tripropylenglykol, Thiodiethylenglykol und Thiodipropylenglykol. Vorzugsweise verwendet werden Ethylenglykol und Diethylenglykol. Die genannten Diole können einzeln oder in beliebigen Mischungen untereinander eingesetzt werden. Gegebenenfalls können auch geringe Mengen, beispielsweise 1 bis 10 Gew. %, bezogen auf das Diolgewicht, an Alkanolaminen, wie z.B. Ethanolamin, Propanolamin u.a. und/oder Diamine, wie z.B. Ethylendiamin, Piperazin oder ähnliche im Gemisch mit den vorgenannten Diolen verwendet werden.

Die Herstellung der Polyester-polyole erfolgt nach üblichen Verfahren, beispielsweise durch Kondensation unter azeotropen Bedingungen oder durch Schmelzkondensation, gegebenenfalls in Gegenwart an sich bekannter Veresterungskatalysatoren, wie z.B. anorganischen Verbindungen des Titans, Vanadiums oder Zinns und/oder Wasserschleppmitteln, wie z.B. Benzol, Toluol, Xylol oder ähnlichen zur azeotropen Destillation des Kondensationswassers. Die Ausgangskomponenten werden dabei in solchen Mengen eingesetzt, dass das Verhältnis von COOH-Gruppen zu OH-Gruppen bzw. zur Summe aus OH- und NH$_2$-Gruppen 1:1,05 bis 1,3, vorzugsweise 1:1,07 bis 1,15 beträgt. Die Polykondensation wird bei Reaktionstemperaturen von 100 bis 250 °C, vorzugsweise 130 bis 220 °C, unter vermindertem Druck, bevorzugt unter vermindertem Druck in der Endphase der Polykondensation durchgeführt. Die erhaltenen Polyester-polyole haben Säurezahlen kleiner als 3, vorzugsweise kleiner als 2 und insbesondere von ungefähr 0,3 bis 1,0.

Zur Herstellung der erfindungsgemässen thermoplastisch verarbeitbaren Polyurethan-Elastomeren eignen sich die aus dem Stand der Technik bekannten organischen Diisocyanate (a), vorzugsweise die symmetrisch aufgebauten (cyclo)-aliphatischen und aromatischen Diisocyanate, wie z.B. Butan-1,4-diisocyanat, Hexan-1,6-diisocyanat, trans-Cyclohexan-1,4-diisocyanat, p-Phenylendiisocyanat, Diphenylmethan-4,4' und -2,4'-diisocyanat sowie deren Gemische, 3,3'-Dimethyl-diphenylmethan-4,4'-diisocyanat oder Diphenylether-4,4'-diisocyanat. Bevorzugt wird jedoch Diphenyl-methan-4,4'-diisocyanat verwendet.

Als difunktionelle Kettenverlängerungsmittel (c) mit Molekulargewichten von 60 bis 350, vorzugsweise von 60 bis 300, kommen unverzweigte Diole, wie z.B. Ethylen-, Diethylen-, Triethylenglykol, Propandiol-1,3, Butandiol-1,4, Pentandiol-1,5, Hexandiol-1,6 und 1,4-Bis(β-hydroxyethoxy)-benzol in Betracht. Das molare Verhältnis von Polyester-polyol zu Kettenverlängerungsmittel ist abhängig von der gewünschten Härte des Polyurethan-Elastomeren und der eingesetzten Menge an Vernetzungsmittel und kann in breiten Grenzen variiert werden. Bewährt haben sich beispielsweise molare Verhältnisse von Polyester-polyolen zu Kettenverlängerungsmitteln von 1:2 bis 15, vorzugsweise von 1:2 bis 10.

Wie bereits erwähnt wurde, ist erfindungswesentlich, dass zur Herstellung der thermoplastisch verarbeitbaren Polyurethan-Elastomeren höherfunktionelle, vorzugsweise tri-bis hexafunktionelle Vernetzungsmittel (d) mit verwendet werden. Als Vernetzungsmittel bewährt haben sich beispielsweise Polyole, wie Triole, Tetrole, Pentole und Hexole, wobei Triole bevorzugt eingesetzt werden, Trialkanolamine, Ricinusöl und Umsetzungsprodukte mit Molekulargewichten von 100 bis 1000, vorzugsweise von 150 bis 1000, von Triolen und Trialkanolaminen mit Ethylenoxid und/oder Propylenoxid sowie Tetrahydrofuran. Im einzelnen seien beispielhaft genannt: Polyole, wie z.B. Pentaerythrit und Sorbit, Trialkanolamine, wie z.B. Triethanolamin und Tripropanolamin und vorzugsweise Triole, wie z.B. Glycerin, Trimethylolpropan und Hexantriol.

Die Vernetzungsmittel werden in Mengen von 0,01 bis 5 Gew. %, vorzugsweise 0,01 bis 1 Gew.-%, bezogen auf das Gewicht der Polyester-polyole, entsprechend etwa 0,25 bis 25 × 10$^{-3}$ Mol pro kg Polyester-polyol eingesetzt.

Die Herstellung der erfindungsgemässen thermoplastisch verarbeitbaren Polyurethan-Elastomeren erfolgt nach bekannten Verfahren, kontinuierlich oder diskontinuierlich, sowohl nach dem ökonomischen one-shot-Verfahren, bei dem alle Reaktionspartner nacheinander oder gleichzeitig miteinander gemischt werden, als auch nach dem Präpolymerverfahren, bei dem aus den höhermolekularen Polyester-polyolen und den organischen Diisocyanaten zunächst ein Präpolymeres mit NCO-Endgruppen hergestellt wird, das dann mit dem Kettenverlängerungs- und Vernetzungsmittel weiter umgesetzt wird. Die Umsetzung erfolgt durch rasches und intensives Vermischen der Reaktionspartner im Verhältnis von NCO-Gruppen der Diisocyanate zur Summe aller mit NCO-Gruppen reagierenden Wasserstoffatome der Komponenten (b), (c) und (d), vorzugsweise OH-Gruppen, von 1:0,9 bis 1,2, vorzugsweise 1:0,95 bis 1,10 und insbesondere ungefähr 1:1 und reagieren lassen bei Temperaturen von ungefähr 60 bis 230°C, vorzugsweise von 100 bis 180°C. Da die Reaktion exotherm ist und rasch verläuft, ist sie meist nach wenigen Minuten beendet.

Das erhaltene Polyurethan-Elastomere kann danach getempert, granuliert und weiterverarbeitet werden. Es ist auch möglich, das Reaktionsgemisch in die Einzugszone eines Extruders einzutragen, wobei die Umsetzung in kurzer Zeit abgeschlossen wird und das fertige Polyurethan-Elastomere am Extruderaustrag zu entnehmen und direkt zu konfektionieren.

Gegebenenfalls kann es zweckmässig sein, dem Reaktionsgemisch Katalysatoren zur Beschleunigung der Umsetzung von NCO- mit OH-Gruppen einzuverleiben. Als Katalysatoren eignen sich beispielsweise tertiäre Amine, wie z.B. Triethylamin, Dimethylcyclohexylamin, N-Methylmorpholin, N,N′-Dimethyl-piperazin, Diazabicyclo-(2,2,2)-octan und ähnliche sowie insbesondere organische Metallverbindungen wie z.B. Titansäureester, Eisenverbindungen, z.B. Eisenacetonylacetonat, Bleioctoat, Bleinaphthenat, Kobaltnaphthenat, Zinknaphthenat und vorzugsweise Zinnsalze, wie z.B. Zinndiacetat, Zinndioctoat, Zinndilaurat oder die Zinndialkylsalze aliphatischer Carbonsäuren, wie Dibutylzinn-diacetat und -dilaurat. Die Katalysatoren werden üblicherweise in Mengen von 0,001 bis 2, vorzugsweise 0,01 bis 1 Gew.%, bezogen auf das Polyester-polyolgewicht verwendet, wobei jedoch gegebenenfalls auch auf den Katalysatorzusatz ganz verzichtet werden kann.

Neben den Katalysatoren können den Reaktionskomponenten auch andere Hilfs- und Zusatzstoffe ohne Nachteil einverleibt werden. Genannt seien beispielsweise Emulgatoren, die die Mischbarkeit der Ausgangsstoffe verbessern, Stabilisatoren, Alterungs-, Licht- oder Hydrolyseschutzmittel, Gleitmittel, Flammschutzmittel, Farbstoffe, Pigmente, organische und anorganische Füllstoffe, wie Holzmehl, Melamin, Kreide, Kaolin, Talkum, Asbest, Quarz, Glaskugeln, Kurzglasfasern, Aluminiumpulver u.a. Die Hilfs- und Zusatzstoffe können zu einem beliebigen Zeitpunkt während der Herstellung oder Verarbeitung zugesetzt werden. Die verwendeten Mengen sind von der Art der Hilfs- und Zusatzstoffe und dem vorgesehenen Einsatzgebiet der Polyurethan-Elastomeren abhängig und bewegen sich im üblichen Rahmen dessen, was nach dem Stand der Technik bekannt und für die jeweilige Substanzklasse üblich ist.

Die erfindungsgemässen Polyurethan-Elastomeren, die Shore-Härten von 60A bis 75D besitzen, können durch thermoplastische Verarbeitung, wie Spritzguss, Extrusion, Pressen und dergleichen zu Formkörpern weiterverarbeitet werden. Die Produkte finden Verwendung als Dichtungsmassen, Beschichtungsmittel, Maschinenelemente, Rollen und Schuhsohlen.

Die in den Beispielen genannten Teile beziehen sich auf das Gewicht.

Herstellung der Polyester-polyole
Beispiel 1

237 Gew.-Teile eines Dicarbonsäuregemisches, bestehend aus 31 Gew.% Bernsteinsäure, 43 Gew.% Glutarsäure und 26 Gew.% Adipinsäure, 89 Gew.-Teile Ethylenglykol und 103 Gew.-Teile Diethylenglykol werden bei Normaldruck und Temperaturen bis 210°C solange kondensiert, bis kein Kondensationswasser mehr abdestilliert. Danach wird bei vermindertem Druck (bis 130 mbar) unter Ethylenglykol-Rücklauf und Abnahme des restlichen Kondensationswassers bis auf eine Säurezahl von ca. 1 mg KOH/g weiterverestert. Anschliessend wird das überschüssige Ethylenglykol abdestilliert und die OH-Zahl eingestellt. Man erhält ein bei Raumtemperatur flüssiges Polyester-polyol mit folgenden Kennzahlen:

| | |
|---|---|
| OH-Zahl: | 56 mg KOH/g |
| Säurezahl: | 0,3 mg KOH/g |
| Wassergehalt: | 0,02 Gew.% |
| Jodfarbzahl: | 40–60 |

Beispiel 2

Man verfährt analog den Angaben von Beispiel 1, verwendet jedoch als Ausgangskomponenten 147 Gew.-Teile des obengenannten Dicarbonsäuregemisches und 89 Gew.-Teile Ethylenglykol. Man erhält ein bei Raumtemperatur flüssiges Polyester-polyol mit folgenden Kennzahlen:

| | |
|---|---|
| OH-Zahl: | 56 mg KOH/g |
| Säurezahl: | 0,7 mg KOH/g |
| Wassergehalt: | 0,03 Gew.% |
| Jodfarbzahl: | 20–30 |

Herstellung der Polyurethan-Elastomeren
Beispiel 3

1160,7 g (0,6 Mol) Polyester-polyol, hergestellt gemäss Beispiel 1, werden bei 100°C und 20 mbar eine Stunde lang entwässert und mit 196,2 g (2,177 Mol) Butandiol-1,4 und 1,16 g (0,0087 Mol) Trimethylolpropan gemischt. Anschliessend werden in die Mischung bei 100°C 725,6 g (2,902 Mol) geschmolzenes und auf 50°C temperiertes 4,4′-Diphenylmethan-diisocyanat eingerührt, homogenisiert und das Reaktionsgemisch in angewärmten Formen zu Platten vergossen. Das Reaktionsgemisch verfestigt sich innerhalb weniger Minuten und wird zur Vervollständigung der Reaktion noch 24 Stdn. bei 100°C gehalten. Die Platten werden granuliert und das Granulat zu Prüfplatten verspritzt, die vor der Messung bei 100°C 24 Stunden getempert und im Normklima konditioniert werden. Man erhält ein braunes, zähes Polyurethan-Elastomeres mit folgenden mechanischen Eigenschaften:

| | |
|---|---|
| Härte (DIN 53 505): | 48 Shore D |
| Reissfestigkeit (DIN 53 504): | 33 N/mm² |
| Reissdehnung (DIN 53 504): | 550% |
| Weiterreissfestigkeit (DIN 53 515): | 100 N/mm |
| Abrieb (DIN 53 516): | 65 mg |

Beispiel 4

Man verfährt analog den Angaben von Beispiel 3, verwendet jedoch 11,6 g (0,0864 Mol) Trimethylolpropan und als Diisocyanat 756 g (3,024 Mol) 4,4'-Diphenylmethan-diisocyanat. Man erhält ein Polyurethan-Elastomeres mit einem Abrieb von 85 mg.

Vergleichsbeispiel

Man verfährt analog den Angaben des Beispiels 3, verwendet jedoch lediglich eine Mischung aus 1160,7 g (0,6 Mol) Polyester-polyol nach Beispiel 1 und 196,2 g (2,177 Mol) Butandiol-1,4, die mit 722,2 g (2,89 Mol) 4,4'-Diphenylmethan-diisocyanat umgesetzt wird. An den hergestellten Prüfplatten werden folgende mechanische Eigenschaften gemessen:

| | | |
|---|---|---|
| Härte | (DIN 53 505) | 48 Shore D |
| Reissfestigkeit | (DIN 53 504) | 26 N/mm² |
| Reissdehnung | (DIN 53 504) | 600% |
| Weiterreissfestigkeit | (DIN 53 515) | 84 N/mm |
| Abrieb | (DIN 53 516) | 170 mg |

Ein Vergleich zwischen Beispiel 3 und dem Vergleichsbeispiel zeigt, dass durch den geringen Zusatz von Trimethylolpropan fast alle mechanischen Eigenschaften erheblich verbessert werden, wobei insbesondere die Reissfestigkeit und Abriebbeständigkeit stark verbessert werden.

**Patentansprüche**

1. Thermoplastisch verarbeitbare Polyurethan-Elastomere, erhalten durch Umsetzung von
a) organischen Diisocyanaten,
b) Polyester-polyolen mit Molekulargewichten von 800 bis 5000, hergestellt durch Polykondensation einer Dicarbonsäuremischung, die 20 bis 40 Gew.-% Bernsteinsäure, 35 bis 60 Gew.-% Glutarsäure und 20 bis 40 Gew.-% Adipinsäure, bezogen auf das Gesamtgewicht der genannten Dicarbonsäuren enthält, und Diolen oder Mischungen aus Diolen und Diaminen oder Alkanolaminen,
c) difunktionellen Kettenverlängerungsmitteln mit Molekulargewichten von 60 bis 350 und
d) tri- bis hexafunktionellen Vernetzungsmitteln im Verhältnis von NCO-Gruppen zur Summe aller mit NCO-Gruppen reagierenden Wasserstoffatome der Komponenten (b), (c) und (d) von 1:0,9 bis 1,2.
2. Thermoplastisch verarbeitbare Polyurethan-Elastomere nach Anspruch 1, dadurch gekennzeichnet, dass die tri- bis hexafunktionellen Vernetzungsmittel in Mengen von 0,01 bis 5 Gew.-%, bezogen auf das Gewicht der Polyester-polyole, verwendet werden.
3. Thermoplastisch verarbeitbare Polyurethan-Elastomere nach Anspruch 1, dadurch gekennzeichnet, dass als Vernetzungsmittel Triole und/oder Trialkanolamine verwendet werden.
4. Thermoplastisch verarbeitbare Polyurethan-Elastomere nach Anspruch 3, dadurch gekennzeichnet, dass als Triole und/oder Trialkanolamine Glycerin, Trimethylolpropan, Hexantriol, Triethanolamin und/oder Tripropanolamin verwendet werden.

5. Thermoplastisch verarbeitbare Polyurethan-Elastomere nach Anspruch 1, dadurch gekennzeichnet, dass als organische Diisocyanate Butan-1,4-, Hexan-1,6-, trans-Cyclohexan-1,4-, p-Phenylen-, 2,4-Diphenylmethan-, 3,3'-Dimethyl-4,4'-diphenylmethan-, 4,4'-Diphenylether- und vorzugsweise 4,4'-Diphenylmethandiisocyanat verwendet werden.

6. Thermoplastisch verarbeitbare Polyurethan-Elastomere nach Anspruch 1, dadurch gekennzeichnet, dass als Kettenverlängerungsmittel unverzweigte Diole aus der Gruppe Ethylenglykol, Propandiol-1,3, Butandiol-1,4, Pentandiol-1,5, Hexandiol-1,6, Diethylenglykol, Triethylenglykol und 1,4-Bis(β-hydroxyethoxy)-benzol verwendet werden.

7. Verfahren zur Herstellung von thermoplastisch verarbeitbaren Polyurethan-Elastomeren, dadurch gekennzeichnet, dass man
a) organische Diisocyanate,
b) Polyester-polyole mit Molekulargewichten von 800 bis 5000, hergestellt durch Polykondensation einer Dicarbonsäuremischung, die
20 bis 40 Gew.-% Bernsteinsäure,
35 bis 60 Gew.-% Glutarsäure und
20 bis 40 Gew.-% Adipinsäure, bezogen auf das Gesamtgewicht der genannten Dicarbonsäuren enthält, und Diolen oder Mischungen aus Diolen und Diaminen oder Alkanolaminen,
c) unverzweigte Diole mit Molekulargewichten von 60 bis 350 als Kettenverlängerungsmittel und
d) 0,01 bis 5 Gew.-%, bezogen auf das Polyester-polyolgewicht, eines tri- bis hexafunktionellen Vernetzungsmittels
im Verhältnis von NCO-Gruppen zur Summe aller mit NCO-Gruppen reagierenden Wasserstoffatome der Komponenten (b), (c) und (d) von 1:0,9 bis 1,2 bei Temperaturen von 60 bis 230°C umsetzt.

**Claims**

1. Thermoplastically processable polyurethane elastomers obtained by reacting
a) organic diisocyanates,
b) polyester-polyols having a molecular weight of from 800 to 5000 and prepared by polycondensation of a dicarboxylic acid mixture which contains 20 to 40% by weight of succinic acid, 35 to 60% by weight of glutaric acid, and 20 to 40% by weight of adipic acid, based on the total weight of the said dicarboxylic acids, and diols or mixtures of diols and diamines or alkanolamines,
c) difunctional chain extenders having a molecular weight of from 60 to 350, and
d) tri- to hexafunctional crosslinking agents, the ratio of NCO groups to the sum of all hydrogen atoms of components b), c) and d) which react with NCO groups being from 1:0.9–1.2.

2. Thermoplastically processable polyurethane elastomers as claimed in claim 1, wherein the tri- to hexafunctional crosslinking agents are used in an amount of from 0.01 to 5% by weight, based on the weight of the polyester-polyols.

3. Thermoplastically processable polyurethane elastomers as claimed in claim 1, wherein triols and/or trialkanolamines are used as crosslinking agents.

4. Thermoplastically processable polyurethane elastomers as claimed in claim 3, wherein glycerol, trimethylolpropane, hexanetriol, triethanolamine and/or tripropanolamine are used as triols and/or trialkanolamines.

5. Thermoplastically processable polyurethane elastomers as claimed in claim 1, wherein 1,4-butane diisocyanate, 1,6-hexane diisocyanate, trans-1,4-cyclohexane diisocyanate, p-phenylene diisocyanate, 2,4'-diphenylmethane diisocyanate, 3,3'-dimethyl-4,4'-diphenylmethane diisocyanate, 4,4'-diphenylether diisocyanate and – preferably – 4,4'-diphenylmethane diisocyanate are used as organic diisocyanates.

6. Thermoplastically processable polyurethane elastomers as claimed in claim 1, wherein linear diols selected from the group of ethylene glycol, 1,3-propanediol, 1,4-butanediol. 1,5-pentanediol, 1,6-hexanediol, diethylene glycol, triethylene glycol and 1,4-bis(β-hydroxyethoxy)-benzene are used as chain extenders.

7. A process for the preparation of thermoplastically processable polyurethane elastomers, wherein
a) organic diisocyanates,
b) polyester-polyols having a molecular weight of trom 800 to 5000 and prepared by polycondensation of a dicarboxylic acid mixture which contains
20 to 40% by weight of succinic acid,
35 to 60% by weight of glutaric acid, and
20 to 40% by weight of adipic acid,
based on the total weight of the said dicarboxylic acids, and diols or mixtures of diols and diamines or alkanolamines,
c) linear diols having a molecular weight of from 60 to 350 as chain extenders, and
d) 0.01 to 5% by weight, based on the weight of the polyester-polyols, of a tri- to hexafunctional crosslinking agent,
the ratio of NCO groups to the sum of all hydrogen atoms of components b), c) and d) which react with NCO groups being from 1:0.9–1.2, are reacted at a temperature of from 60 to 230 °C.

**Revendications**

1. Elastomères de polyuréthannes transformables par voie thermoplastique, préparés par la réaction
a) de diisocyanates organiques,
b) de polyester-polyols avec des poids moléculaires de 800 à 5000, préparés par une polycondensation d'un mélange d'acides dicarboxyliques constitué
de 20 à 40% en poids d'acide succinique,
de 35 à 60% en poids d'acide glutarique et
de 20 à 40% en poids d'acide adipique
(pourcentages par rapport au poids total du mélange d'acides dicarboxyliques) avec des diols ou des mélanges de diols et de diamines ou d'alcanol-amines,
c) d'agents d'allongement des chaînes difonctionnels avec des poids moléculaires de 60 à 350 et
d) d'agents de réticulation tri- à hexa-fonctionnels, le rapport entre les groupes –NCO et la somme de tous les atomes d'hydrogène, réagissant avec ces groupes –NCO, des composants (b), (c) et (d) étant de 1:0,9 à 1:1,2.

2. Elastomères de polyuréthannes transformables par voie thermoplastique suivant la revendication 1, caractérisés en ce que les proportions des agents de réticulation tri- à hexa-fonctionnels se situent entre 0,01 et 5% du poids des polyester-polyols.

3. Elastomères de polyuréthannes transformables par voie thermoplastique suivant la revendication 1, caractérisés en ce que les agents de réticulation sont choisis parmi les triols et(ou) les trialcanol-amines.

4. Elastomères de polyuréthannes transformables par voie thermoplastique suivant la revendication 3, caractérisés en ce que les triols et trialcanol-amines sont choisis respectivement parmi la glycérine, le triméthylolpropane, l'hexane-triol, la triéthanol-amine et la tri-propanol-amine.

5. Elastomères de polyuréthannes transformables par voie thermoplastique, suivant la revendication 1, caractérisés en ce que les diisocyanates organiques sont choisis parmi le diisocyanate-1,4 de butane, le diisocyanate-1,6 d'hexane, le diisocyanate-1,4 de cyclohexane trans, le diisocyanate de paraphénylène, le diisocyanate de 2,4'-diphényl-méthane, le diisocyanate de 3,3'-diméthyl 4,4'-diphényl-méthane, le diisocyanate d'éther 4,4'-diphénylique, le diisocyanate de 4,4'-diphényl-méthane étant préféré.

6. Elastomères de polyuréthannes transformables par voie thermoplastique suivant la revendication 1, caractérisés en ce que les agents d'allongement des chaînes sont choisis parmi les diols non ramifiés du groupe de l'éthylène-glycol, du propane-diol-1,3, du butane-diol-1,4, du pentanediol-1,5, de l'hexane-diol-1,6, du diéthylène-glycol, du triéthylène-glycol et du 1,4-bis-(β-hydroxy-éthoxy)-benzène.

7. Procédé de préparation d'elastomères de polyuréthannes transformables par voie thermoplastique, caractérisé en ce que l'on fait réagir entre 60 et 230 °C:
a) des diisocyanates organiques,
b) des polyester-polyols avec des poids moléculaires de 800 à 5000, préparés par une polycondensation d'un mélange d'acides dicarboxyliques constitué
de 20 à 40% en poids d'acide succinique,
de 35 à 60% en poids d'acide glutarique et
de 20 à 40% en poids d'acide adipique
(pourcentages par rapport au poids total du mélange d'acides dicarboxyliques) avec des diols ou des mélanges de diols et de diamines ou d'alcanol-amines,

c) des diols non ramifiés avec des poids moléculaires de 60 à 350 comme agents d'allongement des chaînes et

d) 0,01 à 5% en poids par rapport au poids du polyesterpolyol d'un agent de réticulation tri- à hexa-fonctionnel,

avec un rapport des groupes –NCO à la somme de tous les atomes d'hydrogène réagissant avec ces groupes –NCO des composants (b), (c) et (d) compris entre 1:0,9 et 1:1,2.